# EUROPEAN PATENT APPLICATION

(11) **EP 1 564 256 A1**
(43) Date of publication of application: **17.08.2005**
(21) Application number: 03774100.6
(22) Date of filing: 20.11.2003
(51) Int. Cl.: C08L 101/00, C08L 23/26

(54) **THERMOSETTING RESIN COMPOSITION**

(30) Priority: 22.11.2002 JP 2002340066
(71) Applicant: NIPPON PETROCHEMICALS CO., LTD., Tokyo 105-0001 (JP)
(72) Inventor: TAKASHIMA, Tsutomu, Tsurumi-ku, Yokohama, Kanagawa 230-0078 (JP)
(74) Representative: Strehl Schübel-Hopf & Partner
(86) International application number: PCT/JP2003/014836
(87) International publication number: WO 2004/048476

(57) **Abstract**

A thermosetting resin composition which is improved in impact resistance, thermal crack resistance, oxidative degradation resistance and thermal degradation resistance without impairing the heat resistance represented by HDT and which is suitable for the encapsulation of semiconductors and the like, is provided. The thermosetting resin composition comprises (A) a thermosetting resin, (B) a liquid polybutene containing an aldehyde gourp and (C) a curing agent added at need thereto, wherein the main component of the liquid polybutene has an aldehyde structure at a terminal and the main chain thereof as a structure in which 80% or more of the repeating unit have a structure represented by the Formula (1). The impact resistance and thermal crack resistance are attained by making a phase structure comprised with resin of the thermosetting resin composition after the curing reaction wherein a µm unit size of a dispersed phase which consists primarily of the component derived from an aldehyde group containing liquid polybutene, exists in a continuous phase which consists primarily of the thermosetting resin.

## Description

### Technical Field

The present invention relates to the improvement of impact resistance properties of a thermosetting resin composition which is used with a reactive liquid polybutene and provides especially an epoxy resin compound which is improved in impact resistance, cracking resistance in thermal cracking test, oxidative degradation resistance and thermal degradation resistance, and which is used for the encapsulation of semiconductors and the like.

### Background Art

A thermosetting resin is used in many applications independently or combinations with other resins, and especially in many applications of electrical and mechanical components from the point of advantages such that electrical insulation properties are good, mechanical strength is sufficient, thermal resistance is good, coefficient of thermal expansion is in low level and moreover the price is low and the like. On the other hand, lowness of toughness is given as the worst disadvantage which is common to the thermosetting resin, and many studies have been conducted for the improvements.

The impact resistance improvement of an epoxy resin composition which is one example of thermosetting resins has been proposed by the introduction of flexible component to epoxy resin. For example, it is widely recognized that the use of rubber particle with core shell structure (e.g. Refer to Patent Documents 1 and 2.), and the introduction of reactive liquid rubber (e.g. Refer to Patent Documents 3 to 5.), and the introduction of reactive liquid polybutene (e.g. Refer to Patent Document 6.) and the like are effective, but simultaneously the questionable points are cleared up.

For example, the method that flexible epoxy resin is reacted with reactive material as described in reference Patent Documents 1 to 6 makes thermal resistance and mechanical strength and the like such as flexible strength to low level, and the method to add core shell structure rubber particle, for example, MBS powder (core shell resin particle of methyl methacrylate - styrene - butadiene) and epoxy group-containing composite acrylic rubber particle and rubber fine particle of crosslinking acrylic rubber fine particle and the like, makes the increase of viscosity significantly and has a problem of storage stability.

The method to add the reactive liquid rubber, for example, carboxyl-terminated modified butadiene acrylonitrile rubber (hereinafter referred to as CTBN) has less occurrence of the above mentioned problem.
Here, for the epoxy resin composition containing CTBN, during the progress of the curing reaction, CTBN which is compatibilized initially in epoxy resin generates phase separation from epoxy resin, and a continuous phase which is formed by the epoxy resin and a dispersed phase which is formed by CTBN are formed (sea-island structure), so that the impact resistance properties are improved by relying on the phase structure characteristics. On the other hand, CTBN which does not generate phase separation and is taken into the continuous phase of epoxy resin makes the degradation of thermal resistance which is represented by heat distortion temperature (hereinafter referred to as HDT) of epoxy resin. To be more precise, as for CTBN, the problem is pointed out that the control with respect to reactivity and affinity properties based on the structure is not sufficient, and by a kind of curing agent and curing condition, the size and distribution of the CTBN dispersed phase varies so that the properties of the epoxy resin composition turn to change significantly. Moreover, since CTBN has unsaturated bond part in the main chain, the essential problem has been known with respect to long term reliability such that oxidation degradation and thermal degradation and the like easily occur.

Also, as for the liquid rubber modified epoxy resin (e.g. Refer to Patent Document 7) which the epoxy resin is modified by CTBN, and which is proposed recently, these problems are not sufficiently solved.

On the other hand, the improvement study on phenolic resin has been conducted. For example, studies on the improvement of impact resistance of specific phenolic resin by aromatic polyester (e.g. Refer to Patent Document 8), and on toughening phenolic resin by specific polyethylene terephthalate, polyurethane, methyl methacrylate based copolymer and the like (e.g. Refer to Patent Document 9) have been conducted, but these materials are extremely unsatisfactory where the improvement on the toughening is insufficient and flowability deteriorates and the like.

As for phenolic resin, the improvement of impact resistance by the use of reactive liquid rubber is widely studied method. For example, the kneeding method of emulsion polymerization latex of the functional rubber having functional groups such as epoxy group, hydroxyl group, carboxyl group, and amino group to the phenolic resin(e.g. Refer to Patent Document 10), the method that conjugated diene based rubber latex as NBR and the like which has good compatibility, under making to contain the anion based surface active agent, is made to disperse into resin before dehydration process of phenolic resin (e.g. Refer to Patent Document 11), and the compounding method of epoxy polybutadiene and radical polymer initiator at kneeding compound materials(e.g. Refer to Patent Document 12), are inevitable to degrade flowability significantly when the rubber is added to the extent that toughening of phenolic resin takes effect. Accordingly, there are problems to impair the practical processability and with toughening, the excellent thermal resistance of phenolic resin deteriorates.
[Patent Document 1]
   JP61-42941 B
[Patent Document 2]
   JP 2-117948 A
[Patent Document 3]
   JP58-25391 B
[Patent Document 4]
   JP10-182937 A
[Patent Document 5]
   JP3036657 B
[Patent Document 6]
   EP045749A
[Patent Document 7]
   J P 2001-089638 A
[Patent Document 8]
   JP61-168652 A
[Patent Document 9]
   JP62-209158 A
[Patent Document 10]
   JP 62-59660A
[Patent Document 11]
   JP3-17149 A
[Patent Document 12]
   JP 3-221555A

### Disclosure of Invention

The present invention is to provide a thermosetting resin composition such as epoxy resin and phenolic resin and the like which improves impact resistance, thermal cracking resistance, oxidative degradation resistance and thermal degradation resistance without impairing the heat resistance represented by HDT and is suitable for the encapsulation of semiconductors and the like.

As the result of keen studies, the inventor discovered that the above objective can be accomplished by the use of an aldehyde group containing liquid polybutene and completed the present invention.

The first aspect of the present invention relates to a thermosetting composition comprising wherein (A) a thermosetting resin of 5 to 100 parts by weight, (C) a curing agent of 0 to 95 parts by weight (A total of the both is made to 100 parts by weight), (B) at least one aldehyde group containing liquid polybutene (hereinafter referred to as "aldehyde group containing liquid polybutene") of 1 to 200 parts by weight.

The second aspect of the present invention according to the first point of the present invention relates to the thermosetting composition comprising wherein the "aldehyde group containing liquid butene" comprises aldehyde group which is formed on terminal carbon of liquid polybutene.

The third aspect of the present invention according to any of the first point and the second point of the present invention relates to the thermosetting composition wherein 80% or more of the repeating unit in the main chain structure of the "aldehyde group containing liquid polybutene" is represented by the structure of Formula (1).

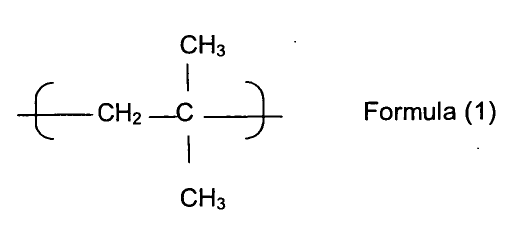

The fourth aspect of the present invention according to any of the first point to the third point of the present invention relates to the thermosetting composition comprising wherein the number-average molecular weight of the "aldehyde group containing liquid polybutene" is in the range of 300 to 6,000.

The fifth aspect of the present invention relates to a thermosetting composition comprising wherein (A) the thermosetting resin of 5 to 100 parts by weight, (D) the curing agent of 0 to 95 parts by weight (A total of (A) and (D) is made to 100 parts by weight), epoxy group containing liquid polybutene which (B) the "aldehyde group containing liquid polybutene" and (C) epoxy structure are formed virtually only on the terminal carbon, contains 1 to 200 parts by weight (hereinafter referred to as "epoxy group containing liquid polybutene").

The sixth aspect of the present invention according to the fifth point of the present invention relates to the thermosetting composition comprising wherein as for "epoxy group containing liquid polybutene", 80% or more of the repeating unit in the main chain structure is represented by the structure of the Formula (1).

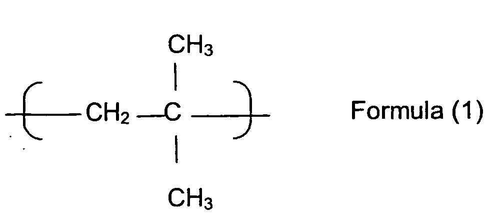

The seventh aspect of the present invention according to any of the fifth point to the sixth point of the present invention relates to the thermosetting composition comprising wherein the number-average molecular weight of the "epoxy group containing liquid polybutene" is in the range of 300 to 6,000.

The eighth aspect of the present invention according to any of the first point to the seventh point of the present invention relates to the thermosetting composition comprising wherein the main phase structure of the resin phase in the composition observed by transmission electric microscope by dyeing method is a sea-island structure which is formed from a continuous phase and a circular or elliptical dispersed phase having size of 100µm or less, and also observable interfacial phase exists in the whole periphery of said dispersed phase.

The ninth aspect of the present invention according to any of the first point to the eighth point of the present invention relates to the thermosetting composition comprising wherein the "thermosetting resin" (A) is epoxy resin or phenolic resin.

### Brief Description of Drawings

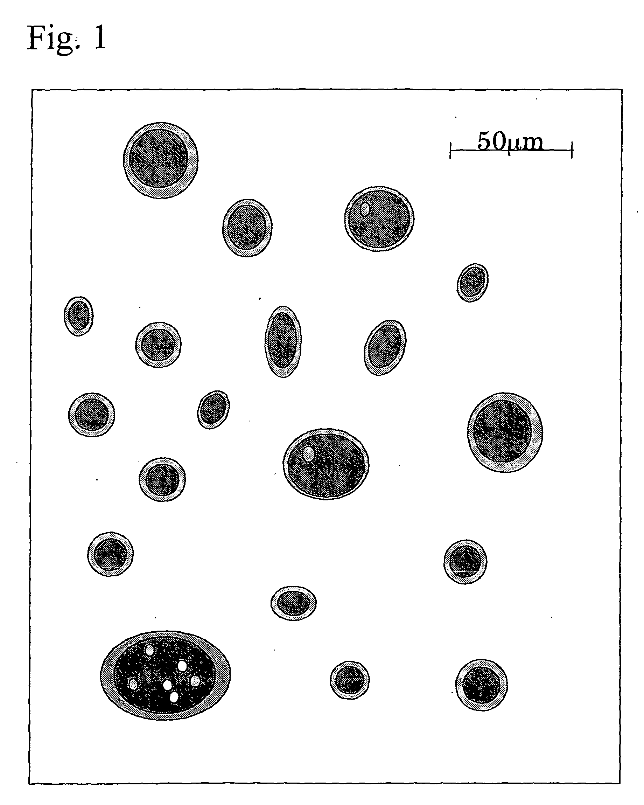

Figure 1 is a schematic illustration of a typical phase structure.

### Best Mode for Carrying Out the invention

The present invention is described in detail as follows.

The thermosetting resin according to the present invention is defined to the material which is initially normal liquid low molecular weight compound (sometimes which can be called as prepolymer) and which has a property that generates propagation of polymerization of prepolymer and structuralization of three dimensional network by bringing about chemical change on account of application of heat, catalyst or ultraviolet ray and the like. Accordingly the heating is not always required. To put concretely, typical examples are listed as phenolic resin, urea resin, melamine resin, epoxy resin, urethane resin, silicone resin, alkyd resin, allyl resin, unsaturated polyester resin, diallyl phthalate resin, furan resin, polyimide and the like.

Phenolic resin of the thermosetting resin according to the present invention is not limited specifically and is on the market, and novolak type phenolic resin, which is given as an example, is obtained by the method where phenol and formalin (formaldehyde aqueous solution) or formaldehyde are fed into a reaction vessel in the mole ratio of phenol and formaldehyde so as to be 0.5 to 1.0, and then, heated after addition of catalysts such as oxalic acid, hydrochloric acid, sulfuric acid, or toluene sulfonic acid and the like, and after reflux reaction is conducted for a certain period of time, in order to remove separated water, vacuum dehydration or leaving-rest dehydration is conducted, and then remained water and unreacted phenol are removed. Also, with respect to resol type phenolic resin, the above mentioned method can be used as well by controlling the thermal history at dynamic heat treatment accurately. These resins or co-condensation phenolic resin obtained by use of multiple raw materials are applied independently or by combining two kinds or more.

As for epoxy resin of the thermosetting resin according to the present invention, properties, epoxy equivalent value, molecular weight, molecular structure and the like are not limited, and chemical compounds which have two oxirane-rings or more in one molecule can be applied, and publicly known various types of epoxy resin can be used.

For example, glycidyl ether type epoxy resin such as bisphenol A, bisphenol F, bisphenol A bromide, or novolak glycidyl ether and the like; glycidyl ester type epoxy resin such as hexahydrophthalic acid glycidyl ester and dimmer-acid glycidyl ester and the like; glycidyl amine type epoxy resin such as triglycidyl isocyanurate or tetraglycidyl phenyl methane and the like; linear fatty acid epoxy resin such as epoxy polybutadiene or epoxidized soybean oil and the like; and moreover, alicyclic epoxy resin such as 3,4-epoxy-6-methylcyclohexyl methyl carboxylate, or 3,4-epoxy cyclohexylmethyl carboxylate and the like can be listed and they can be applied with one kind or with two kinds or more.

Epoxy resin which exhibits liquid in room temperature is listed as recommendable, for example, glycidyl ether type epoxy resin which is produced under alkaline reaction condition between epichlorohydrin and aromatic chemical compound having one hydroxyl group or more is listed and concretely bisphenol A epoxy resin, or the trade name of Epikote #828 (Manufactured by Japan Epoxy Resin, Co., Ltd.) is listed.

The "aldehyde group containing liquid polybutene" according to the present invention can be obtained by the publicly known method where aldehyde group is introduced by means of chemical modification of carbon-carbon unsaturated bond in polybutene.

Also, according to the present invention, polybutene which is possible to make chemical modification can be used without any limitation specifically. However, "aldehyde group containing liquid polybutene" having aldehyde group formed on the terminal carbon is preferable from the point of excellent reactivity, and/or "aldehyde group containing liquid polybutene" having the structure of 80% or more of the repeating unit in the main structure with the Formula1; is preferable from the point of stability of thermal resistance and oxidation deterioration resistance of "aldehyde group containing liquid polybutene" during the thermosetting resin composition production process and taken in the thermosetting resin composition which is obtained. Accordingly, by using such specific liquid polybutene which has the structure to produce "aldehyde group containing liquid polybutene", the effect of the present invention can be exhibited.

The "aldehyde group containing liquid polybutene" according to the present invention can be produced by the following as the example.

To begin with, polybutene containing a large quantity of terminal vinylidene structure is produced in accordance with JP10-306128 A. According to said method, by the use of olefin raw materials which are constituted by isobutene independently or isobutene and in some cases butane-1 or butane-2, they are made to polymerize by trifluoric boron based catalyst, then since n-butene does not practically copolymerize with isobutene, liquid polybutene which contains 60 mole percent or more of terminal vinylidene structure and which has the Formula(1) structure with 80% or more of the repeating unit in the main chain, can be obtained easily.

Then, said terminal position of carbon-carbon unsaturated bond is conducted to the epoxidized reaction with peroxide and the like (USP 3,382,255). Here, said epoxidized product is epoxy group containing liquid polybutene (hereinafter "epoxy group containing liquid polybutene ") which epoxy structure is formed practically only on terminal carbon, and is the intermediate product of the "aldehyde group containing liquid polybutene" at the same time and is possible to conduct simultaneous use with "aldehyde group containing liquid polybulene".

Then, "epoxy group containing liquid polybutene" is obtained by conducting publicly known isomerization reaction, for example, which is described in JP 2908557 B, JP3-503783 A (Hereinafter, the "aldehyde group containing liquid polybutene" and the mixture of "aldehyde group containing liquid polybutene" and "epoxy group containing liquid polybutene" are sometimes named generically "reactive liquid polybutene group".).

The "reactive liquid polybutene group" which is obtained by the above mentioned production method, can be used such as making extremely pure product by isolation, containing of unreacted polybutenes without any change, or a mixture by further addition of liquid polybutene. Accordingly, the production method of "aldehyde group containing liquid polybutene", is recommendable from the point that unreacted product in each process can be used directly, where polymerization reaction is conducted by using C4 olefin as raw material and polybutene which contains teminal vinylidene structure having more than predetermined mole percent, is made to produce "epoxy group containing liquid polybutene " as chemical intermediate.

The number-average molecular weight of the "reactive liquid polybutene group" according to the present invention is more preferable in the range of 300 to 6,000.

In case of 6,000 or more, the effect of impact resistance and the like increases, but processability can be the problem caused by the increase of viscosity. In case of 300 or less, as shown in EP045749A on "epoxy group containing liquid polybutene", since polybutene chain which is bonded to "reactive liquid polybutene group" forms short length, the improvement effect of impact resistance and the like by solubilization into epoxy resin and the like becomes dominant so that thermal resistance represented by HDT becomes deteriorated.

In producing the thermosetting resin according to the present invention, for the thermosetting resin of 100 parts by weight or for the total of thermosetting resin and curing agent of 100 parts by weight, "aldehyde group containing liquid polybutene" or "reactive liquid polybutene group" formed by "aldehyde group containing liquid polybutene" and "epoxy group containing liquid polybutene" of 1 to 200 parts by weight, preferably, of 5 to 100 parts by weight can be added. More preferably, the range of 10 to 50 parts by weight shows the best balance of thermal resistance, rigidity and impact resistance and the like of the thermosetting resin.

In the "reactive liquid polybutene group", as the larger ratio of "aldehyde group containing liquid polybutene", which will be described later, the particle size of the dispersed phase in the sea-island structure makes small and interfacial phase, which will be described later, increases and also, becomes uniform. This is speculated to be dependent on the difference of reactivity between "aldehyde group containing liquid polybutene", "epoxy group containing liquid polybutene" and "thermosetting resin", "curing agent", "curing promoter" and the like. Generally, in case that the particle size is required to make minimum, or in case that interfacial phase, which will be described later, is required to make increase, the total quantity of "reactive liquid polybutene group" can be made to be "aldehyde group containing liquid polybutene", but in order to conduct the adjustment and optimization of particle size and interfacial phase, the ratio of "epoxy group containing liquid polybutene" is adjusted.

As a curing agent which is added at need according to the present invention, any kind which reacts with the above mentioned thermosetting resin or reactive liquid polybutene group and which is practicable to cure, can be applied, and for epoxy resin taking as an example, polyaddition type curing agent such as aliphatic polyamine, alicyclic polyamine, aromatic polyamine, anhydride based (methyl hexa hydrophthal anhydride, phthalic anhydride derivatives and the like); catalytic type curing agent such as aromatic tertiary amine, imidazole compound, Lewis acid complex and the like;, can be listed. Also, the curing agents listed above can be used independently or blending together. The thermosetting resin and curing agent are, when used, blended in the normal range based on the group mole equivalent of the thermosetting resin and curing agent.

The component, besides thermosetting resin, curing agent, and "reactive liquid polybutene group" used for the present invention, is curing promoter if taking epoxy resin as the example in the thermosetting resin. As concrete examples, amine based compound and its salt compound such as benzyl dimethyl amine(BDMA), 1-benzyl-2- phenyl imidazole, 2-heptadecylimidazole, 2-phenyl-4,5-dihydroxyimidazole, 2-phenyl -4 -methyl-5-hydroxymethylimidazole, 2,4-diamino-6-[2 -methylimidazolyl-(1)]-ethyl-s-triazine, 1-cyanoethyl-2-undecylicimidazole, 2-ethyl-4-methylimidazole, 1,8-diaza bicycle [5,4,0] undecene-7 and the like; phosphine based and its salt compound such as triphenyl phosphine, tres-(2,6-dimethoxyphenyl)phosphine and the like; or organometallic salt such as tin octylate;, can be listed. In producing the thermosetting resin compound according to the present invention, if epoxy resin is taken as an example, for 100 parts by weight of the total with curing agent of the thermosetting resin, curing promoter can be added of 0 to 20 parts by weight. The publicly known curing promoter used in phenolic resin can be applied.

In the thermosetting resin according to the present invention, among the effects of the present invention, in order to conduct the control of deterioration of thermal resistance represented by HDT and the improvement of impact resistance and thermal crack resistance in the most effective way, the main phase structure of resin phase in the compound observed by transmission electron microscope by way of dyeing method is preferable to have the phase structure which forms the sea-island structure having the continuous phase and the dispersed phase of circular or elliptical form with 100 micron or less size (hereinafter referred to as "phase structure A"). Here, the main component of the continuous phase is the cured product (hereinafter referred to as cured product) made by the thermosetting resin (The curing agent is included when used.) and the main component of the dispersed phase is reactive liquid polybutene group.

Moreover, preferably, the main phase structure of resin phase in the compound observed by transmission electron microscope by way of dyeing method is preferable to have the phase structure which forms the sea-island structure having the continuous phase and the dispersed phase of 100 micron or less circular or elliptical form, and the phase structure which the observable interfacial phase in the whole periphery of said dispersed phase exists, is preferable (hereinafter referred to as "phase structure B"). Here, the main component of the continuous phase is the cured product (hereinafter referred to as cured product) made by the thermosetting resin (The curing agent is included when used.) and the main component of dispersed phase is "reactive liquid polybutene group", the main component of the interfacial phase is the reactive product of "reactive liquid polybutene group" and the thermosetting resin and / or reacting agent.

However, both "phase structure A" and "phase structure B" are not described in EP045749A.

A primary factor that the thermosetting resin composition according to the present invention shows excellent in thermal resistance represented by HDP, impact resistance, and thermal crack resistance, is not clearly explained, and the inventors consider that the primary factor is caused by the affinity between the "reactive liquid polybutene" and the thermosetting resin, and peculiar phase structure observed by transmission electron microscope. In Figure1 the brief figure of the typical phase structure is shown.

To be more precise, the "phase structure A" is the phase structure where in the continuous phase which consists primarily of the cured product which shows high elasticity and brittle material, the dispersed phase of µm unit size which consists primarily of component related to "reactive liquid polybutene" which has low elasticity and tough material, exists. In the "phase structure A", when deformation by stress generates, by the difference of poisson's ratio between a component of continuous phase and a component of dispersed phase, the force of separating interface generates and separation occurs. Especially, as for the "phase structure A" according to the present invention, the affinity of the continuous phase and the dispersed phase increases by the resemblance of chemical structure, so that energy consumed by said separation is large quantity. Stress (strain) is consumed (released) by separation of said interface, crack and the like which is the cause of fatal fracture of the material to the continuous phase in epoxy resin does not generate so that impact resistance and thermal crack properties are improved.

Also, "phase structure B" is the phase structure where in the continuous phase which consists primarily of the cured product which shows high elasticity and brittle material, the dispersed phase of µm unit size which consists primarily of component related to the "reactive liquid polybutene" which has low elasticity and tough material, exists, and moreover, it is the phase structure which exists interfacial phase of µm unit size which consists primarily of polymers as the thermosetting resin, curing agent, and "reactive liquid polybutene" which have low elasticity and brittle material in the whole periphery. Said structure is the structure, which is confirmed in phase structure of impact resistant polypropylene resin (block type polypropylene) where it is called as multi-phase structure.

To be more precise, as for impact resistant polypropylene resin, the dispersed phase which is formed by polyethylene exists in structure continuous phase which is formed by polypropylene, and the interfacial phase which is formed by ethylene-propylene copolymer rubber in the periphery of polyethylene dispersed phase exists. In the "phase structure B", when a deformation generates by a stress, in addition to the consumption (release) of the stress(strain) generated in the "phase structure A", at interfacial phase as well, by boundary separation, similarly the stress(strain) is consumed (released), so that the boundary separation energy generated per unit volume is larger compared with "phase structure A". Accordingly, crack and the like which is the cause of fatal fracture of the material in the cured product continuous phase does not occur so that impact resistance and thermal crack properties are improved more effectively.

In order to make "phase structure A" and "phase structure B" as the main phase structure of the thermosetting resin according to the present invention, (A) thermosetting resin (B) "reactive liquid polybutene"(C) curing agent(D)curing promoter are made to be included and before obtaining the final curing composition from blending materials , the process which said "reactive liquid polybutene" is made from suspended liquid mixture consisting of a part of the component selected from (A), (C) and (D) is preferable to be included.

To be more precise, it is the process that as the liquid mixture which is made by blending said "reactive liquid polybutene" and a part of the component selected from (A), (C) and (D), fine dispersed phase which contains the "reactive liquid polybutene" as the main component is made to form. Here, the suspended state is defined that after the mixture, no practical change is taken place while leaving for one month or more at room temperature (hereinafter, said liquid mixture referred to as "suspended liquid mixture").

Here, when said dispersed phase in the "suspended liquid mixture" is observed by microscope, the structure which consists mainly of having at least one phase of interfacial phase in the whole periphery of the dispersed phase, can be confirmed.

Since said process is to establish the condition to contribute for the formation of preferable phase structure to the impact resistance and the like in the thermosetting resin composition finally obtained before the curing reaction, said process can be conducted in accordance with required properties, and all the predetermined components are mixed directly and the curing reaction can be conducted with untouched state.

The reason that said suspended state is formed stably is not clear, but the chemical reaction product of the dissolved "reactive liquid polybutene" and the thermosetting resin and/or the dissolved "reactive liquid polybutene" and the curing agent, is considered to perform the function in terms of surface-active agent in the mixture.

In order to produce the "suspended liquid mixture", the compound ratio of each component, by keeping the relation of functional group equivalent value (g/eq) which contains in each component in the specific range, said "suspended liquid mixture" can easily be produced. Here, the functional group equivalent value (g/eq) shown here means epoxy equivalent value (g/eq) in case that the thermosetting resin is epoxy resin, and active hydrogen group equivalent value (g/eq) in case that the thermosetting resin is phenolic resin. Similarly, it means acid anhydride group group equivalent value (g/eq) in case that the curing agent is acid anhydride, and it means amino group equivalent value(g/eq) in case of amine based curing agent. Also, in case that various functional groups are included, it can be shown as the total reactive functional group equivalent value (g/eq).

To be more precise, in the compound ratio described as functional group equivalent value (g/eq) containing in (A) thermosetting resin and (C) curing agent, the mixture is adjusted such as (A)/(C)>5 or (C) / (A) >5, as either one of (A) and (C) component is in excessive state, and to said mixture 100 parts by weight, the "reactive liquid polybutene" of 1 to 100 parts by weight is compounded, so that the "suspended liquid mixture" of the present invention can be made to produce.

Here, when (A) / (C) or (C) / (A) becomes 5 or less, in final resin composition, the above described phase structure can be developed, but the viscosity of said own "suspended liquid mixture" increases significantly, and practical application is not suitable. Also, in case that "reactive liquid polybutene" of 100 parts by weight or more is used to "suspended liquid mixture" of 100 parts by weight, the same as described above, the viscosity of said own "suspended liquid mixture" increases significantly.

As another example which is listed as recommendable, in a mixture wherein the "suspended liquid mixture" contains the thermosetting resin and "reactive liquid polybutene", as for the compound ratio, the "reactive liquid polybutene" keeps in relation of 1 to 200 parts by weight to the thermosetting resin of 100 parts by weight.

Here, also, in case that "reactive liquid polybutene" is used for 200 parts by weight or more to said thermosetting resin of 100 parts by weight, same as described above, the viscosity of said own "suspended liquid mixture" increases significantly so that it is not of practical use.

The temperature, time, or additive method of each component when "suspended liquid mixture" is produced, is not specifically restricted, or the form of agitation of each component is not also specifically restricted, and if only type which can disperse uniformly. Also, in case that particle size is required for purpose of the application to use, using forced-agitator and the like such as homogenizer and the like is preferable to control.

The "suspended liquid mixture" which is described so far, is the process which the thermosetting resin composition is finally obtained, and is able to contribute to the formation of preferable phase structure for impact resistance and the like. In the final process, in case of obtaining said resin composition, the composition is occasionally added to a shortage of the thermosetting resin and/or the curing agent to said "suspended liquid mixture" so as to be the final functional group equivalent volume ratio of the thermosetting resin and/or the curing agent to said "suspended liquid mixture" in the range of 0.2 to 5, preferably in the range of 0.5 to 1.5.

By the predetermined heat curing to the composition which is in the appropriate range, the thermosetting resin composition according to the present invention can be obtained.

In case that the obtained compositions are applied to the various applications, as components besides the above mentioned, such as in the range that does not impair the effect of the present invention, the publicly known liquid rubber such as liquid reactive rubber, liquid α-olefin polymer and the like; impact resistance improvement such as elastomer, core-shell structure elastomer; fillers such as flame retardant, coupling agent, anti-foam agent, pigment, dye, antioxidant, weathering agent, slipping agent, mold release agent and the like;, can be added and blended properly. Moreover, liquid polybutene group having other basic structure and/or chemically modified structure can be applied.

Moreover, as for fillers, molten silica, ground silica, talc, calcium carbonate, aluminum hydroxide and the like can be listed and in case of making application to the encapsulation of semi-conductors in the resent years, molten silica having 20µm or less of average particle size is recommendable and they can be used independently or combination of any quantity by mixing two kinds or more.

### <Examples>

The present invention is described in detail according to Examples as follows.

### [Reference Production Examples]

### <Production of "reactive liquid polybutene" >

The liquid polybutenes of reference numeral 1 to reference numeral 6 shown in Table 1 are used as raw materials to produce the "reactive liquid polybutene" 1ab to 6ab. The attached letter "a" corresponds to the "epoxy group containing liquid polybutene" and the attached letter "b" corresponds to the "aldehyde group containing liquid polybutene", which are their raw materials. Among reference numeral 1 to reference numeral 6, reference numeral 1 and reference numeral 2 are LV50 and HV-100 respectively which are manufactured by Nippon Petrochemicals Co.,Ltd., which are obtained from the market, and which have rich terminal vinylidene structure(commonly called by "highly reactive polybutene") obtained by Reference Production Examples 3 to 6 or by the production method in JP10-306128A which is disclosed by the inventors.

The "epoxy group containing liquid polybutene"(Reference Production Examples 1a to 6a) is produced by reacting the above mentioned liquid polybutene reference numeral 1 to reference numeral 6 with peracid referring to the above mentioned US P3382255, and the "aldehyde group containing liquid polybutene" (Reference Production Examples 1b to 6b) is produced by isomerization of the above mentioned "epoxy group containing liquid polybutene"(Reference Production Examples 1 a to 6a) as raw materials to make acting 98 percent by weight sulfuric acid referring to the method of the above mentioned JP2908557B.

Each chemical modification is conducted until the terminal vinylidene structure and the epoxy group structure in each raw material are not virtually detected.

**Table 1**

| Liquid Polybutene | | | (Corresponding) Epoxy Group Containing Liquid Polybutene | (Corresponding) Aldehyde Group Containing Liquid Polybutene |
|---|---|---|---|---|
| name | Content | Number-average Molecular Weight | name | name |
| 1 | LV-50 | 430 | 1a | 1b |
| 2 | LV-100 | 980 | 2a | 2b |
| 3 | Highly Reactive Polybutene | 370 | 3a | 3b |
| 4 | Highly Reactive Polybutene | 650 | 4a | 4b |
| 5 | Highly Reactive Polybutene | 1300 | 5a | 5b |
| 6 | Highly Reactive Polybutene | 2300 | 6a | 6b |

| | | | | |
|---|---|---|---|---|
| 1: Shown number-average molecular weight (polystyrene converted value) by GPC measurement | | | | |

### <Examples 1 to 7, Comparative Examples 1 >.

### <Production of mixture before curing reaction >

As production apparatus, variable agitator, reaction temperature indicator, flask equipped with reaction dropping gate are provided in constant temperature controllable heating medium bath. The predetermined quantity of the epoxy group containing liquid polybutene in Reference Production Example 2a, and the predetermined quantity of the adlehyde-containing liquid polybutene in Reference Production Examples 1 b to 6 b (Table 2) are taken in to the flask, and then the respective predetermined quantity of Epikote # 828 as the thermosetting resin, MH-700 as curing agent, and BDMA as curing promoter (Table 2) are fed collectively. Then, while agitating the mixture, the reaction temperature is raised from room temperature to 100°C, and the reaction is conducted for 2 hours with keeping the condition to 100°C.

As the result, in any condition of Examples 1 to 14, the liquid solution of suspended state is obtained and no phase-separation occurs even after 1 month under untouched condition. Also, when said solution is taken pictures by optical microscope, the phase structure of the present invention is confirmed to form.

Also, at the same time, the composition according to Comparative Example 1 is conducted and applied to use for Comparative Example described later.

### (Commodity Explanation)

Epikote #828 (Manufactured by Japan Epoxy Resins Co.,Ltd.):
Epikote #828 is the aldehyde resin epoxy resin which consists primarily of bisphenol A diglycidyl ether. The equivalent of functional group (epoxy group) is approximately 190g/eq.
MH-700(Manufactured by New Japan Chemical Co., Ltd.):
MH-700 is the anhydride based curing agent which consists primarily of methyl hexahydro phthalic anhydride. The equivalent of functional group (anhydride group) is approximately 168g/eq.
BDMA (Reagent of Tokyo Kasei Kogyo Co., Ltd.): benzyl dimethylamine.

**Table 2**

| Examples | Reactive Liquid Polybutene (g) | | Thermosetting Resin Epikote #828 (g) [meq] | Curing Agent MH-700 (g) [meq] | Curing Promoter BDMA (g) |
|---|---|---|---|---|---|
| 1 | 1b | 9.5 | 130 [684] | 4.5 [27] | 0.9 |
| 2 | 2b | 21.6 | 130 [684] | 4.5 [27] | 0.9 |
| 3 | 3b | 8.1 | 130 [684] | 4.5 [27] | 0.9 |
| 4 | 4b | 14.3 | 130 [684] | 4.5 [27] | 0.9 |
| 5 | 5b | 28.6 | 130 [684] | 4.5 [27] | 0.9 |
| 6 | 6b | 50.6 | 130 [684] | 4.5 [27] | 0.9 |
| 7 | 2a | 10.6 | 130 [684] | 4.5 [27] | 0.9 |
| | 2b | 11.0 | | | |

| Comparative Example | Liquid Polybutene | | | | |
|---|---|---|---|---|---|
| 1 | 5 | 28.6 | 130 [684] | 14.5 [27] | 0.9 |

### <Examples 8 to 14, Comparative Examples 2 to 4>

### <Examples of epoxy resin curing reaction and evaluation of physical properties of the final composition>

The epoxy resin composition is made to represent as the thermosetting resin composition in Examples.

The epoxy resin composition according to the present invention is produced by the following procedure. To begin with, the required quantity of MH-700 to the dispersion liquid of Examples 1 to 7 or Comparative Example 1 is made to mix so as to be the formulation ratio described in Table 3, and blended until becoming uniform state under the room temperature. After 1 phr quantity of BDMA is added to the mixture, as curing promoter, three steps of thermal history as (1) 100°C X 2hours, (2) 120°C X 2hours and (3) 140°C X 2hours are given, and each epoxy resin cured product is obtained.

Also, Comparative Example 3 is the case that existing material CTBN1300X8 (UBE Industries, LTD.) is added with the same quantity instead of the fine particle according to the present invention, and Comparative Example 4 is the case that relaxation stress material is not entirely made to add.

In these both cases, conditions of the equivalent value ratio, the quantity of curing promoter, and the thermal history and the like of epoxy resin and the cured product are conducted as the same conditions of the above mentioned Examples 8 to 14 or Comparative Example 2.

The evaluations of physical properties of epoxy resin components are conducted for 5 items which are flexibility, moisture resistance, crack resistance, chemical resistance and thermal resistance. For the evaluations of physical properties, about components obtained from each Example and each Comparative Example, test specimens applicable to each measurement are prepared.

### < Evaluation methods of physical properties >

Each evaluations method of physical properties will be described.

Flexibility: Based on the method of Japanese Industrial Standards(JIS)-K-6901, three items as (1) Barcol hardness, (2) Flexural yield strength and (3) Flexural modulus are measured and flexibility of the cured product is evaluated from the measurements.

The test is conducted for Barcol hardness and flexural yield strength for 5 times and for flexural modulus for 10 times and the average values are obtained.

Moisture resistance: Cured product specimen is kept in boiling water for 10 hours, and the weight difference of before and after the exposure is evaluated as moisture resistance of cured product. Test is conducted for two times and the average value is obtained.

Crack resistance: Japanese Industrial Standards (JIS)-C-2105 (electrical insulating non- solvent resin test method) is applied and 5 pieces of cured product test specimens which metal washer having different heat conductivity are encapsulated, are prepared, and crack is observed while each test specimen is cooled from 150°C to 0°C, and the average crack number is calculated.

Chemical resistance: Cured product specimen is kept in 10% sodium hydroxide solution or n-heptane for 3 days, and the weight difference of before and after the exposure is evaluated as chemical resistance of cured product.

Thermal resistance: Heat distortion test (HDT) is measured based on Japanese Industrial Standards (JIS)-K-6901, and the thermal resistance of the cured product is evaluated from the measured value. The measurement is conducted for 5 times and the average value is obtained.

In Table 3, formulation condition of serial epoxy resin compositions and the evaluation results of physical properties are shown.

**Table 3**

| Formulation Condition | | Example | | | | | | | Comparative Example | | |
|---|---|---|---|---|---|---|---|---|---|---|---|
| | | 8 | 9 | 10 | 11 | 12 | 13 | 14 | 2 | 3 | 4 |
| Curing agent/ Epoxy Resin Component | MH700/ Epikote#828 (Functional Group Equivalent Ratio) | 0.9 | 0.9 | 0.9 | 0.9 | 0.9 | 0.9 | 0.9 | 0.9 | 0.9 | 0.9 |
| Flexibility Component (*1) | Example 1 | 17 | | | | | | | | | |
| | Example 2 | | 17 | | | | | | | | |
| | Example 3 | | | 17 | | | | | | | |
| | Example 4 | | | | 17 | | | | | | |
| | Example 5 | | | | | 17 | | | | | |
| | Example 6 | | | | | | 17 | | | | |
| | Example 7 | | | | | | | 17 | | | |
| | Comparative Example 1 | | | | | | | | 17 | | |
| | CTBN1300 X 8 | | | | | | | | | 17 | |
| | No Addition of Flexibility Component | | | | | | | | | | 0 |
| Curing Promoter | BDMA | 1 | 1 | 1 | 1 | 1 | 1 | 1 | 1 | 1 | 1 |

| | | | | | | | | | | | |
|---|---|---|---|---|---|---|---|---|---|---|---|
| *1: Figures in the table show formulation percentage of each kind of flexibility formulation. | | | | | | | | | | | |

| Physical Properties Evaluation | | Example | | | | | | | Comparative Example | | |
|---|---|---|---|---|---|---|---|---|---|---|---|
| | | 8 | 9 | 10 | 11 | 12 | 13 | 14 | 2 | 3 | 4 |
| Flexibility | (1)Barcol Hardness | 0 | 0 | 0 | 0 | 0 | 0 | 0 | 0 | 0 | 0 |
| | (2)Flexural Yield Strength (kg/mm²) | 6.4 | 5.3 | 3.9 | 5.8 | 5.6 | 3.9 | 5.5 | 4.7 | 6.8 | 12.7 |
| | (3)Flexural Modulus (kg/mm²) | 219 | 199 | 237 | 211 | 187 | 159 | 195 | 147 | 187 | 307 |
| Moisture Resistance | Boiling Water Resistance | 1.0 | 1.1 | 1.2 | 1.0 | 1.0 | 1.0 | 1.1 | 1.0 | 1.1 | 1.0 |
| Crack Resistance | Average Crack Number | 1 | 1 | 0 | 1 | 0 | 0 | 1 | 3 | 0 | 7 |
| Chemical Resistance | 10% NAOH Resistance | 0.2 | 0.2 | 0.2 | 0.2 | 0.2 | 0.2 | 0.2 | 0.2 | 0.3 | 0.2 |
| | n-Heptane | 0.0 | -0.1 | -0.1 | -0.1 | -0.1 | -0.1 | -0.2 | -0.2 | 0.1 | - |
| | Resistance | | | | | | | | | | 0.1 |
| Thermal Analysis | Heat Distortion Temperature HDT(°C) | 120 | 128 | 115 | 128 | 129 | 130 | 133 | 128 | 102 | 133 |
| Phase Structure | | B | B | B | B | B | B | B | A | - | - |

### < Phase structure observation >

Phase structure of Examples and Comparative Examples are observed by the use of transmission electron microscope (TEM) manufactured by JEOL. Ltd. Accelerating voltage is 100kV, and ruthenium oxide is used for dyeing. Accordingly, dying phase is concluded that the phase consists primarily of polybutene based materials.

### Industrial Applicability

A thermosetting resin composition which is formed by reaction of composition by a formulation of a thermosetting resin, curing agent, curing promoter, and "aldehyde group containing liquid polybutene" according to the present invention, the existing problem on physical properties is concluded to be solved. The reason why the problem can be solved as such is that as the main phase structure, a sea-island structure is made to develop a continuous phase which consists primarily of cured product which is formed by a thermosetting resin and/or a curing agent, and a dispersed phase which consists primarily of "aldehyde group containing liquid polybutene" and moreover, an interfacial phase is made so as to have at least one phase in the whole periphery of said dispersed phase.

## Claims

1. A thermosetting composition comprising wherein (A) a thermosetting resin of 5 to 100 parts by weight, (C) a curing agent of 0 to 95 parts by weight (A total of the both is made to 100 parts by weight.), (B) at least one aldehyde group containing liquid polybutene (hereinafter referred to as "aldehyde group containing liquid polybutene") of 1 to 200 parts by weight.

2. The thermosetting composition according to claim 1 of the present invention comprising wherein the "aldehyde group containing liquid butene" comprises the aldehyde group which is formed on terminal carbon of liquid polybutene.

3. The thermosetting composition according to any of claim 1 and claim 2 of the present invention comprising wherein 80% or more of the repeating unit in the main chain structure of the "aldehyde group containing liquid polybutene" is represented by the structure of Formula(1).

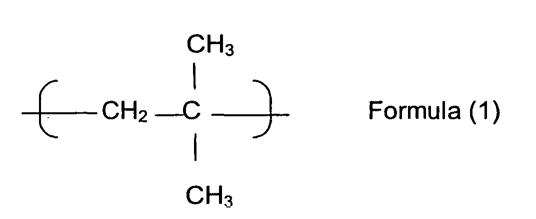

4. The thermosetting composition according to any of claim 1 to claim 3 of the present invention comprising wherein the number-average molecular weight of the "aldehyde group containing liquid polybutene" is in the range of 300 to 6,000.

5. The thermosetting composition comprising wherein (A) a thermosetting resin of 5 to 100 parts by weight, (D) a curing agent of 0 to 95 parts by weight (A total of (A) and (D) is made to 100 parts by weight.), epoxy group containing liquid polybutene which (B) "aldehyde group containing liquid polybutene" and (C) epoxy structure are formed virtually only on the terminal-carbon, contains 1 to 200 parts by weight (hereinafter referred to as "epoxy group containing liquid polybutene").

6. The thermosetting composition comprising wherein as for "epoxy group containing liquid polybutene", 80% or more of the repeating unit in the main chain structure is represented by the structure of the Formula(1).

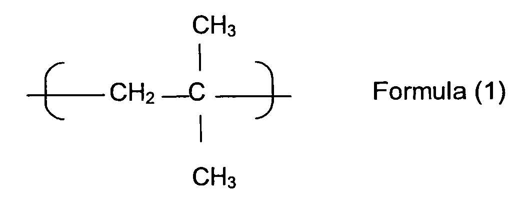

7. The thermosetting composition according to any of claim 5 to claim 6 of the present invention comprising wherein the number-average molecular weight of the "epoxy group containing liquid polybutene" is in the range of 300 to 6,000.

8. The thermosetting composition according to any of claim 1 to claim 7 of the present invention comprising wherein the main phase structure of the resin phase in the composition observed by transmission electric microscope by dyeing method is a sea-island structure which is formed from the continuous phase and the circular or elliptical dispersed phase of 100µm or less, and also observable interfacial phase exists in the whole periphery of said dispersed phase.

9. The thermosetting composition according to any of claim 1 to claim 8 of the present invention comprising wherein the "thermosetting resin"(A) is epoxy resin or phenolic resin.
